# EUROPEAN PATENT APPLICATION

(11) **EP 0 856 769 A1**
(43) Date of publication of application: **05.08.1998**
(21) Application number: 98300133.0
(22) Date of filing: 08.01.1998
(51) Int. Cl.: G03B 27/58

(54) **Cassette**

(30) Priority: 29.01.1997 GB 9701809
(71) Applicant: Fujifilm Electronic Imaging Limited, London NW3 6HY (GB)
(72) Inventor: Oliver, Mark Charles, Nr Caddington, Bedfordshire LU1 4DJ (GB)
(74) Representative: Skone James, Robert Edmund

(57) **Abstract**

A cassette for receiving and storing a photographic sheet (13). The cassette comprises a housing (1) having a slot (6) through which the film sheet is introduced into the cassette; and a guide member (2) in the housing, wherein at least part of the guide member is preformed as a flexible self-supporting curve which guides a sheet fed through the slot along a corresponding curved path whereby the sheet is formed into a scroll (5).

## Description

The present invention relates to a cassette for receiving and storing a photographic sheet from a setting machine such as an imagesetter.

After film or paper is exposed by an off-line image setter, the material is required to be stored secure from further light exposure and from mechanical damage until it can safely be transported to a film processor.

A conventional cassette is described in US-A-4218032. The photographic sheet is guided between a driven inner rotary core and an outer guide member which is biassed towards, and supported by, the inner rotary core.

In accordance with a first aspect of the invention there is provided a cassette for receiving and storing a photographic sheet, the cassette comprising a housing having a slot through which the film sheet is introduced into the cassette; and a guide member in the housing, wherein at least part of the guide member is preformed as a flexible self-supporting curve which guides a sheet fed through the slot along a corresponding curved path whereby the sheet is formed into a scroll.

The invention recognises the fact that conventional cassettes have an unnecessary number of moving parts. By preforming the guide member in a desired, self-supporting curved form, an inner rotary core is not required in order to support the guide member. This results in a cassette with a reduced number of moving parts (and preferably no driven parts), resulting in increased reliability. In addition the reduced number of parts reduces assembly and manufacture time, material cost and weight.

Preferably the flexibility of the preformed curve enables the curve partially to unwind as the sheet is formed into a scroll. Typically the guide member is curved through an angle greater than 270° when no photographic sheet is stored in the cassette. This ensures that the photographic sheet is guided back on itself without buckling.

The guide member may comprise a plurality of links, but preferably the guide member comprises a sheet.

Preferably the guide member comprises a friction reducing material such as polytetrafluoroethane (PTFE). The guide member may consist entirely of friction reducing material, or the friction reducing material may be provided as a coating.

Friction between the guide member and the photographic sheet may be further reduced by providing one or more bearings or bearing surfaces on the guide member which engage the photographic sheet as it is wound into the form of a scroll. The bearings may comprise rotating bearings and the bearing surfaces may comprise ridges or corrugations in the guide member.

The guide member may be open at its sides, but preferably the cassette further comprises a pair of side guides which guide the sides of the photographic sheet so as to prevent a telescoping action during the storage process. The side guides may be provided separately from the guide member, and may be mounted to the housing. Alternatively the side guides may be provided by shaping the guide member at its edges.

The guide member may be of substantially rectangular form, or alternatively may be generally T-shaped.

In accordance with a second aspect of the present invention there is provided a method of manufacturing a cassette, the method comprising providing a housing having a slot; preforming a self-supporting curve in a flexible guide member; and mounting the guide member in the housing. The curve may be preformed before or after the guide member is mounted in the housing.

The curve may be preformed in any suitable manner. For instance the curve may be preformed in a mould having a suitable curved shape. Alternatively the curve may be preformed by deformation of the guide member, e.g. by bending a sheet around a tube.

In accordance with a third aspect of the present invention there is provided a method of storing a photographic sheet, the method comprising feeding the photographic sheet into a cassette, the cassette comprising a guide member at least part of which is preformed as a flexible self-supporting curve, whereby the guide member guides the sheet along a corresponding curved path whereby the sheet is formed into a scroll.

For ease of manufacture the guide member is preferably mounted at one end only to the housing.

A number of embodiments of the present invention will now be described with reference to the accompanying drawings, in which:-
Figure 1 is a cross-sectional side view of an example of a cassette according to the present invention with a film sheet being fed through the slot;
Figure 2 is a view of the cassette of Figure 1 with the film sheet wound into the form of a scroll;
Figure 3 is a perspective view of the guide member shown in Figures 1 and 2;
Figure 4 is a perspective view of an alternative guide member;
Figure 5 is a plan view of the guide member of Figure 4;
Figure 6 is a plan view of an alternative guide member with bearing surfaces;
Figure 7 is a cross-section of the guide member of Figure 6 along line A-A;
Figure 8 is a plan view of a further alternative guide member with rotational bearings;
Figure 9 is a cross-section of the guide member of Figure 8 along a line B-B; and
Figure 10 is a perspective view of part of an alternative cassette showing the guide member and side-plates.

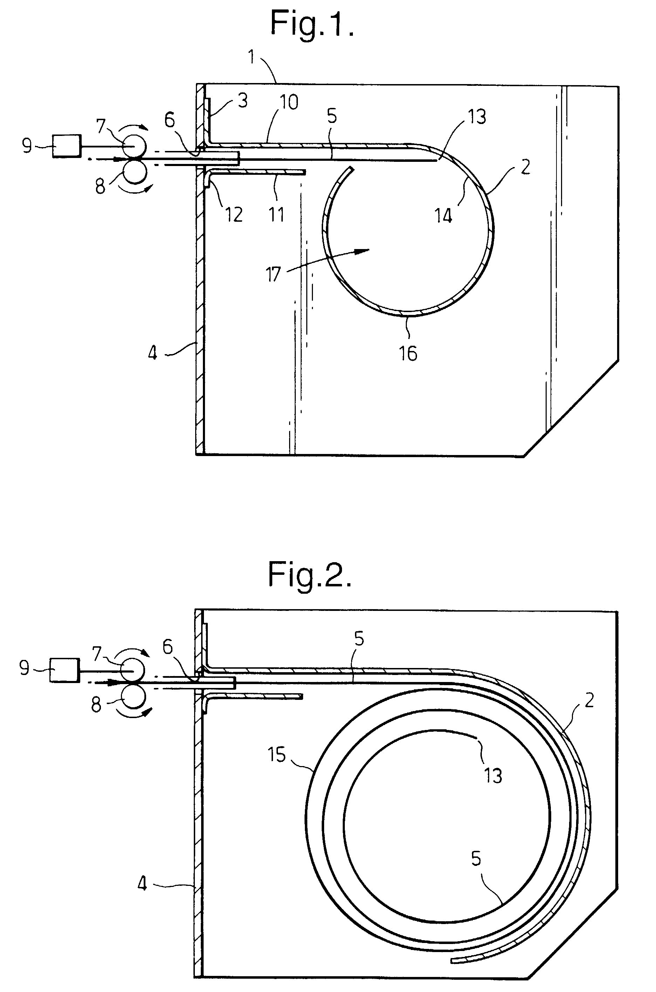

The cassette shown in Figures 1 and 2 comprises a housing 1 containing a guide member 2. One end of the guide member 2 is preformed as a self-supporting curve or scroll 16, and the other end 3 is mounted to the front wall 4 of the housing. The curve 16 is self-supporting in the sense that no inner rotary core is required in the position indicated generally at 17 to support it. The curve 16 is preformed by bending an initially flat aluminium sheet around a steel tube. In use, the cassette is mounted adjacent an outlet position of an image setter so that photographic film or paper 5 is fed out of the image setter into a slot 6 in the front wall 4 of the housing. The film 5 is driven by a pair of drive rollers 7,8 driven by a drive motor 9. As the film 5 enters the slot 6, it is guided between a planar arm 10 of the guide member 2, and a guide 11 which is mounted at one end 12 to the front wall 4 of the housing. In the position shown in Figure 1, the front end 13 of the film 5 is about to engage the curved inner surface 14 of the guide member 2 which forces the film 5 into a corresponding curved path as it is pushed in further.

As the film 5 is progressively fed into the cassette, it is wound in on itself into a scroll 15 (shown in Figure 2) by the guide member 2. The outward radial force of the scroll 15 causes the guide member 2 to unwind progressively as illustrated in Figure 2. By decreasing its curvature progressively over time, the guide member 2 negates the need for existing turns of the film 5 to contract as more film is fed in. As a result there are no frictional forces of one turn of the film moving against another. In addition the radial forces exerted by the film 5 are balanced by an equal and opposite force provided by the inner surface of the guide member 2 against the last turn of the film as it expands to accept more film.

Providing that the film 5 being fed into the cassette has a low enough surface frictional component against the inner surface of the guide member 2, and the radial forces exerted by the expanding guide member 2 itself are low enough, the film 5 can continue to be fed into the cassette without jamming or buckling. For this reason, the guide member 2 is preformed into a large enough diameter that the intended amount of film once fed into the cassette increases the diameter of the guide member 2 by a small amount thus not increasing the radial forces significantly. In one example the guide member 2 has a diameter of 76-102mm (3-4 inches).

The material and thickness of the guide member 2 are chosen to ensure that the forces exerted on the film 5 remain reasonably constant. The materials and thickness that are ideal for the guide member 2 are any material or combinations of materials that exhibit characteristics of extremely low surface friction coefficient like PTFE or compounds of the same, but has the ability to be formed into a scroll and will return to this form time after time when lightly extended by the continual rolling of the film. Obviously, the scroll must not deform significantly when the first winding of film or rolled material is introduced. The type of materials and thickness of the scroll is dependant on the material that is required to be rolled in terms of its thickness and structural rigidity and its surface fiction with the scroll surface.

Suitable materials for the guide member 2 are metal (e.g. thin spring aluminium) coated in a friction reducing material such as PTFE. Alternatively the guide member 2 may itself be formed of a low friction plastic material.

In one example where the film 5 has a thickness of 1 x 10⁻⁴m (4 thou) the guide member 2 comprises a PTFE coated aluminium sheet of similar thickness.

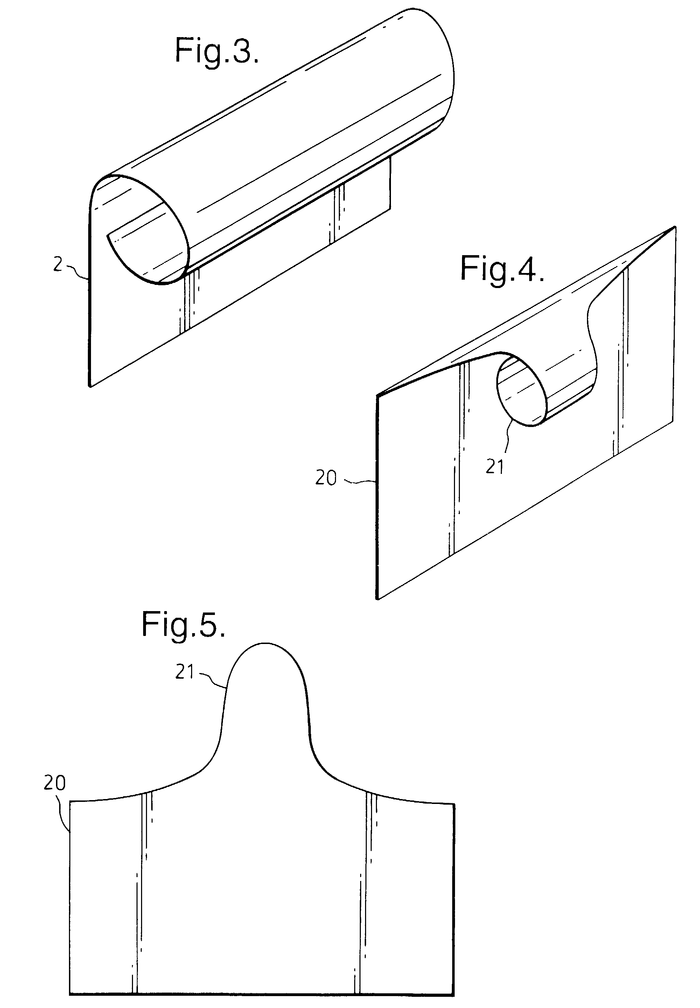

Figure 3 is a perspective view showing the guide member 2 only before the film 5 is fed in. The guide member 2 is of generally rectangular form when uncoiled.

Figure 4 is a perspective view showing an alternative guide member 20. The generally T-shaped form of the guide member 20 is shown in the plan view of Figure 5, in which the guide member is unrolled. An inner arm portion 21 facilitates the bending of the film 5 and prevents it buckling.

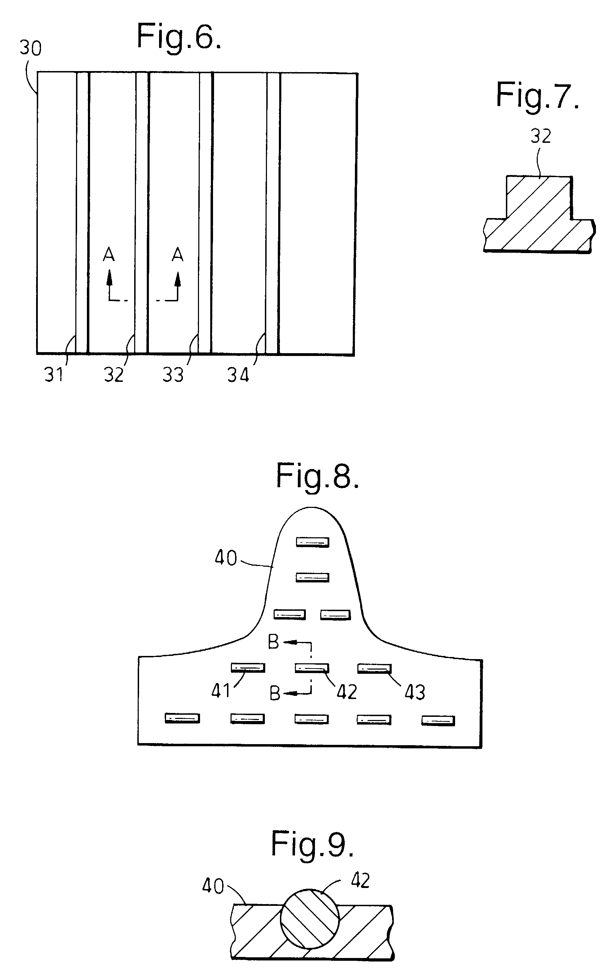

A further alternative guide member 30 is illustrated in the plan view of Figure 6, in which the guide member 30 is unrolled. In this case a plurality of bearing surfaces are provided by longitudinal ridges 31-34. The ridges 31-34 are of generally rectangular section as illustrated in Figure 7. Alternatively the longitudinal bearing surfaces 31-34 may be of generally triangular section and/or may be provided by corrugations of the guide member 30.

Figures 8 and 9 illustrate a further alternative guide member 40. In this case the inner surface of the guide member 40 is provided with a plurality of roller bearings 41-43 etc. which engage the film sheet 5 and reduce the coefficient of friction between the film and the inner surface of the guide member 40.

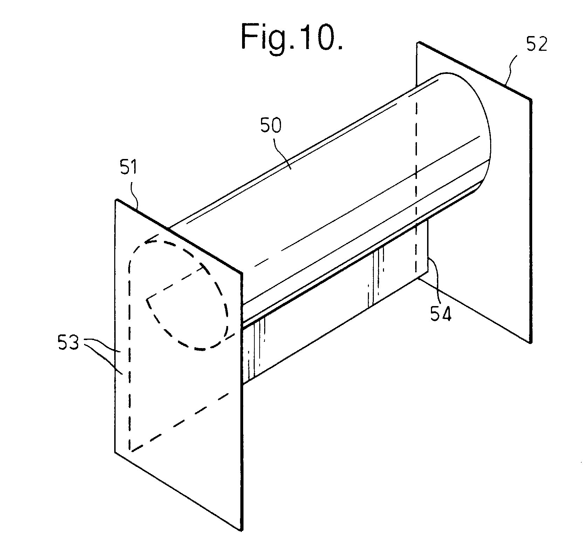

Figure 10 is a perspective view of part of an alternative cassette showing a guide member 50 and planar side-plates 51,52. The side-plates 51,52 are mounted to side walls of the cassette housing (not shown). The guide members 51,52 guide the sides of the film as it is fed in and prevent the film from telescoping. Alternatively, side guide members may be provided by curving or otherwise shaping the edges 53,54 of the guide member 50. The planar side-plates 51,52 may alternatively be domed or cone shaped, either concave or convex.

The cassette is manufactured by preforming the guide member 2,20,30,40,50 as required and mounting the preformed guide member at one end to the front wall 4 of the housing 1.

## Claims

1. A cassette for receiving and storing a photographic sheet, the cassette comprising a housing having a slot through which the photographic sheet is introduced into the cassette; and a guide member in the housing, wherein at least part of the guide member is preformed as a flexible self-supporting curve which guides a sheet fed through the slot along a corresponding curved path whereby the sheet is formed into a scroll.

2. A cassette according to claim 1 wherein the at least part of the guide member is preformed such that the curve partially unwinds as the sheet is formed into a scroll.

3. A cassette according to claim 1 or 2 wherein the preformed curve is curved by an angle of greater than 270 degrees when no photographic sheet is stored in the cassette.

4. A cassette according to any of the previous claims wherein the guide member comprises a sheet.

5. A cassette according to any of the preceding claims wherein the guide member comprises one or more bearings or bearing surfaces which engage the photographic sheet as it is wound into a scroll.

6. A cassette according to any of the preceding claims further comprising a pair of side guides which guide the sides of the photographic sheet.

7. A cassette according to any of the preceding claims wherein the guide member is generally T-shaped when unrolled.

8. A cassette according to any of the preceding claims wherein the guide member is mounted at one end only to the housing.

9. A cassette according to any of the preceding claims, wherein the guide member comprises a friction reducing material.

10. A method of manufacturing a cassette according to any of the preceding claims, the method comprising providing a housing having a slot; preforming a self-supporting curve in a flexible guide member; and mounting the guide member in the housing.

11. A method according to claim 10, wherein the curve is preformed before the guide member is mounted in the housing.

12. A method according to claim 10 or 11, wherein the curve is preformed by deforming the guide member.

13. A method of storing a photographic sheet, the method comprising feeding the photographic sheet into a cassette, the cassette comprising a guide member at least part of which is preformed as a flexible self-supporting curve, whereby the guide member guides the sheet along a corresponding curved path whereby the sheet is formed into a scroll.
